# EUROPÄISCHE PATENTANMELDUNG

(11) **EP 3 756 932 A1**
(43) Veröffentlichungstag der Anmeldung: **30.12.2020**
(21) Anmeldenummer: 20182374.7
(22) Anmeldetag: 25.06.2020
(51) Int. Cl.: B60L 53/12, B60L 5/00, B60L 53/30

(54) **SYSTEM ZUM INDUKTIVEN LADEN ELEKTRISCHER BATTERIEN IN EINEM STRASSENFAHRZEUG**

(30) Priorität: 25.06.2019 DE 102019117040
(71) Anmelder: Taccad Engineering GmbH, 84030 Landshut (DE)
(72) Erfinder: Aunkofer, Thomas, 84051 Essenbach (DE)
(74) Vertreter: Gustorf, Gerhard

(57) **Zusammenfassung**

1. System zum induktiven Laden elektrischer Batterien einem Straßenfahrzeug.
2. Das System dient zum induktiven Laden einer elektrischen Batterie (34) in einem Straßenfahrzeug (16) durch eine Primärspule (26), die in die von dem Straßenfahrzeug (16) überfahrene Fahrbahn (14) integriert ist und elektrische Leistung an eine im Fahrzeug (16) untergebrachte und mit der Batterie (34) verbundene Sekundärspule (30) berührungslos überträgt. Gemäß der Erfindung vorgesehen, dass die Primärspule (26) an ein Erdkabel (22) einer Überlandleitung angeschlossen ist.

## Beschreibung

Die Erfindung betrifft ein System zum induktiven Laden elektrischer Batterien in einem Staßenfahrzeug, das insbesondere mit einem Elektromotor für den Antrieb ausgerüstet ist.

Aus EP 3 187 362 A1 ist eine Batterieladevorrichtung für Flurförderzeuge bekannt, bei der die Aufladung der Traktionsbatterie über Induktionsschleifen erfolgt, die in den Boden der Fahrbahn eingelassen sind. Die Primärspule ist dabei Teil eines Moduls, dem ein weiterer Modul zugeordnet ist, welcher im Fahrzeug befestigt ist und die Sekundärspule aufweist. Von der Primärspule wird induktiv in die Sekundärspule des Fahrzeugs die elektrische Energie übertragen, um beispielsweise die Traktionsbatterie aufzuladen, was sowohl im Stillstand des Fahrzeugs als auch während der Fahrt erfolgen kann.

Ein ähnliches System mit den Merkmalen des Oberbegriffs des Anspruchs 1 ist aus US 2003/0 200 025 A1 bekannt.

Schließlich ist Gegenstand der DE 10 2011 106 354 A1 ein Verfahren zum Bau von Stromtrassen, die als Erdkabel in Fernstraßen verlegt werden, wobei eine unifunktionale oder eine multifunktionale Nutzung mit sinnvoller Verwendung der bei der Stromleitung auftretenden Wärmeverluste ermöglicht werden soll ("Fernstraßen-Chordar").

Aus dem erläuterten Stand der Technik ergibt sich nicht, wie die in den Boden eingelassenen Module mit elektrischer Energie versorgt werden. Der Erfindung liegt daher die Aufgabe zugrunde, ein System der im Oberbegriff des Anspruchs 1 umrissenen Gattung zur Verfügung zu stellen, bei dem die Module der Primärspulen in besonders wirtschaftlicher Weise mit Strom versorgt werden können.

Zur Lösung dieser Aufgabe ist gemäß der Erfindung vorgesehen, dass die Primärspule jedes Moduls an ein Erdkabel angeschlossen ist, beispielsweise einer Überlandleitung. Diese Lösung bietet den wesentlichen Vorteil, dass die Stromtrassen, die zur Energieversorgung von großen Räumen verlegt werden müssen, nicht mehr als Freileitungen konzipiert werden müssen, sondern im Boden verlegt werden, was den doppelten Vorteil hat, dass Freileitungen entbehrlich sind und gleichzeitig eine Integration in beispielsweise Autobahnen möglich ist. Zwar sind Kabelverbindungen zur Stromübertragung von Kraftwerken in lokalen Leitungsnetzen wirtschaftlich aufwendiger als Freileitungen, was jedoch vor allem bei neuen Erschließungsgebieten und beim Ausbau oder der Renovierung von Fernstraßen durch die technischen Vorteile der Ladungsübertragung und des Landschaftsschutzes wettgemacht wird.

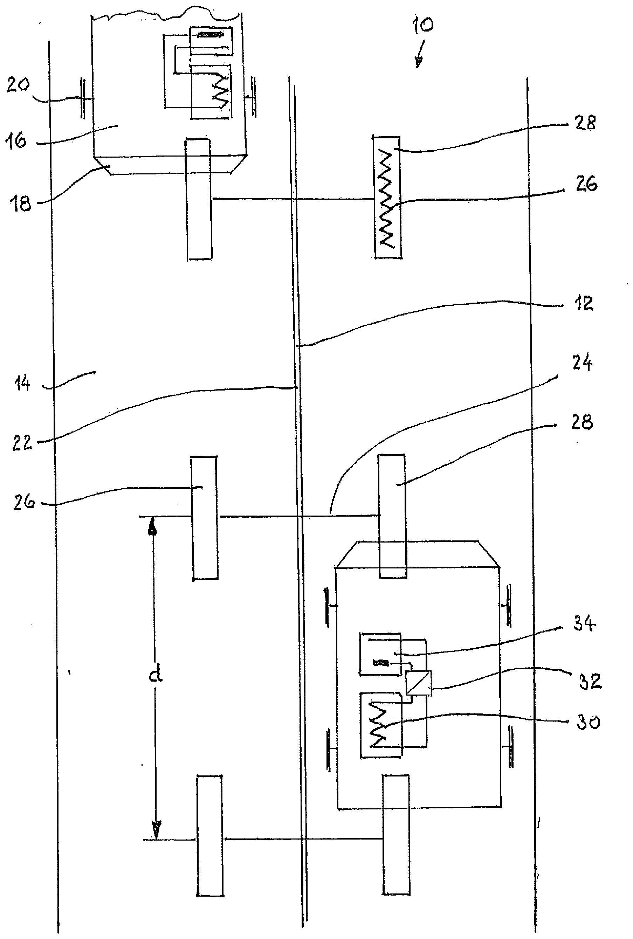

Weitere Merkmale und Vorteile der Erfindung ergeben sich aus den Patentansprüchen und aus der folgenden Beschreibung eines Ausführungsbeispiels, das in der Zeichnung dargestellt ist. Diese zeigt in Draufsicht eine Prinzipdarstellung des Systems gemäß der Erfindung.

In der Zeichnung ist eine zweispurige Schnellstraße 10 angedeutet, die zwei durch einen Mittelstreifen 12 voneinander getrennte Fahrbahnen 14 hat. Selbstverständlich ist das System gemäß der Erfindung auch bei einspurigen Landstraßen oder mehrspurigen Autobahnen einsetzbar.

Sowohl auf der in der Figur rechten als auch auf der linken Fahrbahn 14 ist jeweils ein Straßenfahrzeug 16 angedeutet, von dem eine Motorhaube 18 und vier Räder 20 symbolisch gezeigt sind.

Gemäß der Erfindung ist im Mittelstreifen 12 der Schnellstraße 10 ein Erdkabel 22 verlegt, beispielsweise eine Überlandleitung, die weit voneinander entfernte Ortschaften mit elektrischer Energie versorgen kann, die etwa in einem Großkraftwerk im Norden des Landes erzeugt wird, um sie durch das Erdkabel 22 einer Vielzahl von Ortschaften, Industrieanlagen und anderen Verbrauchern zuführen. Bei der Überlandleitung handelt es sich um eine Versorgungsleitung im Bereich der Mittel- und Hochspannung, etwa ab 1 kV, die im Gegensatz zu Niederspannungsnetzen < 1 kV zur verlustarmen Energieübertragung über größere Entfernungen eingesetzt wird.

Das Erdkabel 22 ist über Zweigleitungen 24 mit Primärspulen 26 verbunden, die Teil von Modulen 28 sind. Die Module 28 sind in gewünschten Abständen d von beispielsweise 500 m zueinander entlang des Erdkabels 22 in den beiden Fahrbahnen 14 versenkt angebracht. Die Module 28 mit ihren Primärspulen 26 sind Teil von an sich bekannten Induktionsschleifen, denen Sekundärspulen 30 entsprechen, die im Boden der Straßenfahrzeuge 16 untergebracht sind. Die Sekundärspulen 30 sind über Gleichspannungswandler 32, von denen einer in dem rechten Fahrzeug 16 eingezeichnet ist, mit den beiden Polen einer Batterie 34 verbunden, die ebenfalls in dem Straßenfahrzeug 16 untergebracht ist.

Beim Überfahren der Module 28 mit ihren Primärspulen 26 wird von dieser die über das Erdkabel 22 zugeführte elektrische Leistung an die Sekundärspule 30 des Fahrzeugs 16 übertragen, was während der Fahrt erfolgt.

Selbstverständlich besteht die Möglichkeit, mittels der erläuterten Induktionsschleifen auch elektrische Energie an andere Verbraucher im Fahrzeug 16 zu übertragen, beispielsweise zum induktiven Laden von Mobiltelefonen.

## Patentansprüche

1. System zum induktiven Laden einer elektrischen Batterie (34) in einem Straßenfahrzeug (16) durch eine Primärspule (26), die in die von dem Straßenfahrzeug (16) überfahrene Fahrbahn (14) integriert ist und elektrische Leistung an eine im Fahrzeug (16) untergebrachte und mit der Batterie (34) verbundene Sekundärspule (30) berührungslos überträgt, **dadurch gekennzeichnet, dass** die Primärspule (26) an ein Erdkabel (22) einer Überlandleitung angeschlossen ist.

2. System nach Anspruch 1, **dadurch gekennzeichnet, dass** das Erdkabel (22) ebenfalls in die Fahrbahn (14) eingelassen ist.

3. System nach Anspruch 1 oder 2, **dadurch gekennzeichnet, dass** an das Erdkabel (22) eine Reihe von Primärspulen (26) angeschlossen ist.

4. System nach Anspruch 3, **dadurch gekennzeichnet, dass** die Primärspulen (26) einen Abstand (d) in der Größenordnung von 500 m voneinander haben.
